# FASCICULE DE BREVET EUROPEEN

(11) **EP 2 971 837 B1**
(45) Date de publication et mention de la délivrance du brevet: **05.04.2017**
(21) Numéro de dépôt: 14703378.1
(22) Date de dépôt: 10.02.2014
(51) Int. Cl.: F16D 51/24, F16D 65/00, F16D 65/22

(54) **FREIN À TAMBOUR COMPORTANT UN CYLINDRE DE ROUE AVEC UNE SURFACE D'APPUI RÉDUITE SUR LE PLATEAU ET AVEC INTERPOSITION D'UN ÉLÉMENT DE GUIDAGE ENTRE LE CYLINDRE ET LE PLATEAU**
TROMMELBREMSE MIT RADZYLINDER MIT REDUZIERTER LAGERFLÄCHE AUF DER PLATTE UND MIT EINEM FÜHRUNGSELEMENT ZWISCHEN DEM ZYLINDER UND DER PLATTE
DRUM BRAKE COMPRISING A WHEEL CYLINDER WITH A REDUCED BEARING SURFACE ON THE PLATE AND WITH A GUIDE ELEMENT INTERPOSED BETWEEN THE CYLINDER AND THE PLATE

(30) Priorité: 14.03.2013 FR 1352270
(43) Date de publication de la demande: 20.01.2016
(73) Titulaire: Chassis Brakes International B.V., 1011 VM Amsterdam (NL)
(72) Inventeur: DUPAS, Christophe, F-91120 Palaiseau (FR); PRIN, Stéphane, F-93150 Le Blanc-Mesnil (FR); BESAURY, Laëtitia, F-60200 Compiègne (FR); CORBION, Pascal, F-94100 Saint-Maur (FR)
(74) Mandataire: Brevalex
(86) Numéro de dépôt international: PCT/EP2014/052519
(87) Numéro de publication internationale: WO 2014/139739

(56) Documents cités:
- EP-A2- 0 811 781
- DE-A1- 4 204 028
- US-A- 3 200 908
- US-A- 4 227 594

## Description

L'invention se rapporte à un frein à tambour de véhicule automobile.

L'invention se rapporte plus particulièrement à un frein à tambour de véhicule automobile qui comporte :
- un plateau fixe ;
- un tambour, monté à rotation par rapport au plateau, qui est susceptible de porter une roue associée,
- au moins un segment de freinage, de courbure correspondant à un rayon d'une jupe interne de friction du tambour, qui est monté mobile sur le plateau entre une position inactive dans laquelle il est rappelé élastiquement vers l'axe du tambour avec un jeu déterminé par rapport à la jupe de friction, et une position active dans laquelle il est sollicité radialement contre la jupe de friction ;
- au moins un cylindre de roue hydraulique qui comporte un piston susceptible de solliciter le segment de freinage vers sa position active et qui comporte un corps dont une face de fixation est destinée à être reçue contre une face correspondante du plateau, dont une portée cylindrique fait saillie à partie de ladite face de fixation et traverse un perçage axial complémentaire du plateau, et dont au moins une vis de fixation, qui traverse le plateau, est reçue dans un taraudage de la face de fixation.

On connaît déjà des conceptions de ce type dans lesquelles un corps de cylindre de roue comporte une face de fixation dont la surface est entièrement en appui axialement contre le plateau. Le cylindre de roue est maintenu dans cette position par au moins une vis de fixation, formant ainsi une liaison plane avec le plateau.

Cependant, on a constaté à l'usage que l'activation du frein à tambour pour freiner une roue provoquait des nuisances sonores très désagréables. Ces nuisances sonores sont notamment provoquées par la propagation de vibrations entre le cylindre de roue et le plateau Le document EP 0 811 781 A2 montre un frein à tambour d'après le préambule de la revendication 1.

L'invention remédie à ce problème en proposant un frein à tambour du type décrit précédemment, caractérisé en ce qu'au moins une partie de la face de fixation excluant le taraudage comporte un évidement destiné limiter la surface de la face de fixation en appui sur le plateau, et en ce qu'un élément de guidage en translation est interposé entre la portée et le perçage du plateau pour découpler vibratoirement le cylindre de roue du plateau en l'autorisant à vibrer sensiblement axialement au travers du perçage indépendamment du plateau.

Selon d'autres caractéristiques de l'invention :
- l'élément de guidage est un élément de guidage réalisé en matériau élastique destiné à rappeler axialement le cylindre vers une position d'équilibre ;
- l'élément de guidage élastique est interposé sensiblement radialement entre la portée et le perçage du plateau de manière à amortir les vibrations radiales de la portée du cylindre ;
- l'élément de guidage élastique est un anneau élastique ;
- l'anneau élastique est reçu dans une gorge annulaire qui est réalisée à la jonction de la portée et de la surface d'appui du corps du cylindre ;
- l'anneau élastique est reçu axialement et radialement contre un chanfrein formé au bord du perçage ;
- l'anneau élastique est réalisé en un matériau élastomère ;
- le matériau de l'anneau élastique permet un débattement axial du cylindre compris entre 0,1 et 2mm ;
- l'évidement est réalisé sensiblement suivant la moitié de la face de fixation du corps du cylindre.

D'autres caractéristiques et avantages apparaitront au cours de la lecture de la description détaillée qui va suivre pour la compréhension de laquelle on se reportera aux dessins annexés parmi lesquels :
- la figure 1 est une vue de face qui représente un frein à tambour réalisé selon les enseignements de l'invention ;
- la figure 2 est une vue en section de la figure 1 selon un plan de coupe axial vertical ;
- la figure 3 est une vue de détail de la figure 2 qui représente le cylindre de roue fixé au plateau ;
- la figure 4 est une vue de derrière du cylindre de roue du frein à tambour de la figure 1 ;
- la figure 5 est une vue en section selon le plan de coupe 5-5 de la figure 4 qui représente le cylindre de roue réalisé selon els enseignements de l'invention.

Pour la suite de la description, on adoptera des orientations :
- longitudinale dirigée d'arrière en avant et indiquée par la flèche "L" des figures ;
- verticale dirigée de bas en haut et indiquée par la flèche "V" des figures ;
- transversale dirigée de gauche à droite et indiquée par la flèche "T" des figures.

Ces orientations sont adoptées de manière non limitative uniquement pour simplifier la compréhension de la description. La direction verticale est notamment une indication purement géométrique sans rapport avec la direction de la gravité.

La direction longitudinale "L" étant parallèle à un axe "A" du tambour, elle sera aussi appelée direction "axiale" dans la description et dans les revendications. Un plan orthogonal à cette direction longitudinale sera qualifié de "radial".

Pour la suite de la description, des éléments présentant une structure identique ou des fonctions analogues seront désignés par un même numéro de référence.

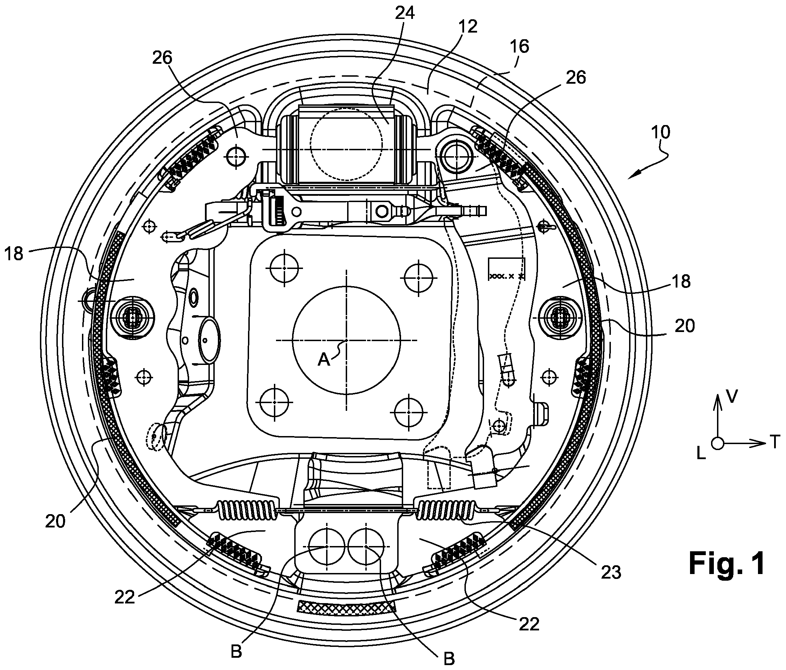

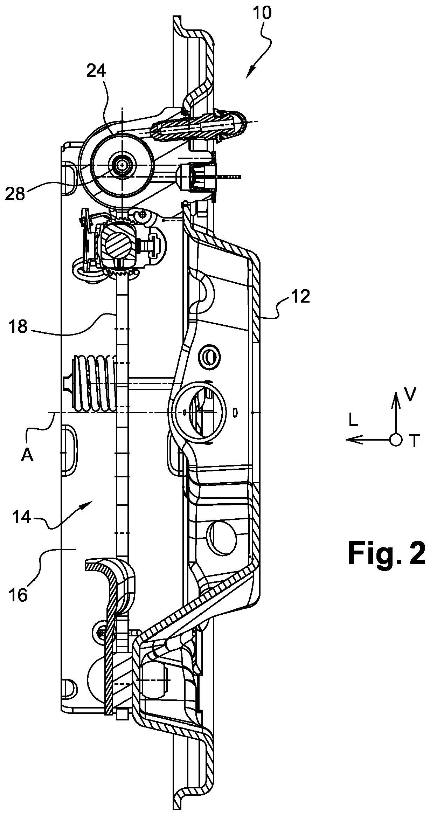

On a représenté aux figures 1 et 2 un frein 10 à tambour de véhicule automobile qui est destiné à être monté sur une roue (non représentée) montée tournante autour d'un axe "A" longitudinal de rotation.

Le frein 10 comporte un plateau 12 qui est monté fixe par rapport au châssis du véhicule automobile. Le plateau 12 s'étend dans un plan globalement transversal par rapport à l'axe "A" de la roue.

Le frein 10 comporte aussi un tambour 14 qui est susceptible de porter une roue (non représentée) associée. Le tambour 14 comporte une jupe 16 cylindrique de friction, dont on a aussi représenté en pointillés l'emplacement sur la figure 1, qui s'étend longitudinalement vers l'avant depuis une face 34 avant du plateau 12 et qui est montée coaxiale avec l'axe "A" de la roue. Le tambour 14 est ainsi monté à rotation par rapport au plateau 12.

Deux segments 18 de freinage sont montés sur le plateau 12.

Les deux segments 18 présentent ici une structure et un agencement identiques par symétrie par rapport à un axe vertical passant par l'axe "A" de rotation. Seul un des deux segments 18 sera donc décrit par la suite.

Le segment 18 s'étend globalement verticalement à l'intérieur du tambour 14. Le segment 18 présente une courbure centrée sur l'axe "A" de rotation, qui correspond à celle de la jupe 16. Le segment 18 présente une face 20 de friction externe qui est tournée vers une face interne de friction de la jupe 16. La face 20 de friction présente donc elle aussi une courbure correspondante à celle de la jupe 16 interne de friction du tambour 14.

Le segment 18 est monté sensiblement pivotant sur le plateau 12 par son extrémité 22 inférieure autour d'un point fixe définissant un axe "B" longitudinal de pivotement entre :
- une position inactive dans laquelle il est rappelé élastiquement vers l'axe "A" du tambour 14 avec un jeu radial déterminé par rapport à la jupe 16 de friction, et
- une position active dans laquelle la face 20 de friction est sollicitée radialement contre la face interne de la jupe 16 de friction.

Le rappel élastique des segments 18 vers leur position inactive est réalisé au moyen d'un ressort 23 qui est tendu transversalement entre les deux extrémités inférieures 22 des segments 18.

Pour pousser les deux segments 18 vers leur position active à l'encontre de l'effort de rappel élastique, un cylindre 24 de roue hydraulique est interposé transversalement entre les extrémités 26 supérieures des segments 18.

Le cylindre 24 de roue comporte deux pistons 28 opposés qui sont montés coulissants transversalement dans une chambre hydraulique d'un corps 30. Chaque piston 28 est en appui sur l'extrémité 26 supérieure du segment 18 associé.

Chaque piston 28 est ainsi susceptible de solliciter le segment 18 de freinage associé vers sa position active dès lors que la pression de fluide augmente dans la chambre hydraulique du cylindre 24.

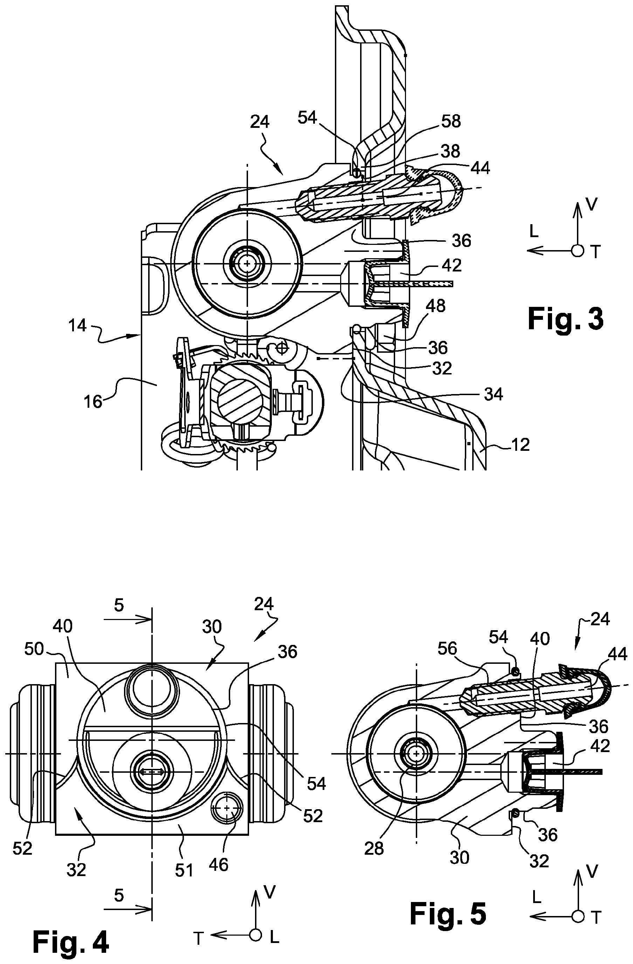

Comme cela est représenté plus en détails à la figure 3, le corps 30 est destiné à être fixé au plateau 12. Il comporte ainsi une face 32 radiale arrière de fixation qui est destinée à être reçue contre la face 34 avant du plateau 12.

Une portée 36 cylindrique fait saillie longitudinalement vers l'arrière à partir de ladite face 32 de fixation. Cette portée traverse un perçage 38 axial complémentaire du plateau 12.

La face 40 arrière libre de la portée 36 présente un premier orifice 42 et un deuxième orifice 44 qui communiquent avec la chambre hydraulique du cylindre 24 de roue. L'orifice 42, 44 peut ainsi être raccordé au circuit hydraulique de freinage en arrière du plateau 12. Le deuxième orifice 44 est un orifice de purge qui n'est pas raccordé au circuit hydraulique.

La face 32 de fixation comporte un taraudage 46 pour permettre la fixation du cylindre 24 de roue contre le plateau 12 au moyen d'une vis 48 de fixation qui traverse le plateau 12.

Or, on a constaté à l'usage que les vibrations provoquées par le freinage dans les segments 18 sont transmises au plateau 12 par l'intermédiaire du cylindre 24 de roue. Le plateau 12 forme ainsi une caisse de résonance qui amplifie les vibrations au point de causer des nuisances sonores.

L'invention propose donc de réduire les nuisances sonores en faisant obstacle à la transmission de vibrations en découplant vibratoirement le cylindre 24 de roue du plateau 12.

Pour diminuer la transmission des vibrations entre le corps 30 du cylindre 24 de roue et le plateau 12, et comme cela est illustré à la figure 4, au moins une partie de la face 32 de fixation excluant le taraudage 46 comporte un évidement 50 destiné limiter la surface 51 de la face 32 de fixation qui est effectivement en appui sur le plateau 12.

Le taraudage 46 est situé dans la surface 51 d'appui qui est effectivement en contact avec la face 34 avant du plateau 12 pour permettre un serrage axial optimal du cylindre 24 contre le plateau 12.

L'évidement 50 est réalisé sensiblement suivant la moitié de la face 32 de fixation du corps 30 du cylindre 24. En se reportant à la figure 4, on constate ainsi que l'évidement 50 s'étend sur la moitié supérieure du corps 30. Une face 52 d'épaulement d'une profondeur déterminée délimite ainsi la surface 51 d'appui et l'évidement 50. La profondeur de l'évidement 50 est par exemple de l'ordre du millimètre.

Le cylindre 24 est donc ainsi susceptible de battre en étant sensiblement articulé autour du taraudage 26 considéré comme centre de micro-rotation et/ou translation longitudinale.

Dans cette configuration, pour guider les battements ou vibrations du cylindre 24 de roue lors d'un freinage, un élément de guidage en translation est interposé entre la portée 36 et le perçage 38 du plateau 12. Cet élément permet de découpler vibratoirement le cylindre 24 de roue du plateau 12 en ne l'autorisant à vibrer sensiblement que axialement au travers du perçage 38 et indépendamment du plateau 12.

L'élément de guidage élastique est ici un anneau 54 réalisé en matériau élastique destiné à rappeler axialement le cylindre 24 vers une position centrale d'équilibre dans le perçage 38. L'anneau 54 élastique est par exemple réalisé en un matériau élastomère.

Pour ce faire, l'anneau 54 élastique est interposé sensiblement radialement entre la portée 36 et le perçage 38 du plateau 12 de manière à éviter que les vibrations ne soient transmises radialement par l'intermédiaire de la portée 36 du cylindre 24.

Comme représenté à la figure 5, l'anneau 54 élastique est ici fixé au cylindre 24 de roue. A cet effet, l'anneau 54 élastique est reçu dans une gorge 56 annulaire qui est réalisée à la jonction de la portée 36 et de la surface 51 d'appui du corps 30 du cylindre 24.

L'anneau 54 élastique permet aussi d'amortir les vibrations axiales du cylindre 24 par rapport au plateau 12. Pour ce faire, l'anneau 54 élastique est reçu axialement et radialement contre un bord 58 du perçage 38 sur la face 34 avant du plateau 12.

Le matériau de l'anneau 54 élastique permet par exemple un débattement axial du cylindre 24 par rapport au plateau 12 compris entre 0.1 et 2mm.

Lors du montage du frein 10 à tambour, l'anneau 54 élastique est tout d'abord inséré dans la gorge 56 de la portée 36 du cylindre 24. Puis, la portée 36 du cylindre 24 de roue est insérée longitudinalement vers l'arrière dans le perçage 38 du plateau 12 jusqu'à ce que la surface 51 d'appui de la face 32 de fixation soit en contact avec le plateau 12. L'anneau 54 élastique est alors en contact avec le bord 58 du perçage 38. Puis, la vis 48 est vissée dans le taraudage 46 pour fixer le cylindre 24 sur le plateau 12.

Lors de l'utilisation du frein 10 à tambour, les vibrations ne peuvent être transmises au plateau 12 que par l'intermédiaire de la surface 51 d'appui qui ne représente qu'une partie réduite de la face 32 de fixation, et par l'intermédiaire de l'anneau 54 élastique qui amortit fortement ces vibrations. Ainsi, les nuisances sonores sont très fortement réduites, voire éliminées, grâce à la présence de l'évidement 50 et de l'anneau 54 élastique.

### Références

- 10: frein
- 12: plateau
- 14: tambour
- 16: jupe
- 18: segments
- 20: face de friction du segment
- 22: extrémité inférieure du segment
- 23: ressort
- 24: cylindre de roue
- 26: extrémité supérieure du segment
- 28: piston du cylindre de roue
- 30: corps du cylindre de roue
- 32: face de fixation du cylindre de roue
- 34: face avant du plateau
- 36: portée du cylindre de roue
- 38: perçage du plateau
- 40: face arrière libre de la portée
- 42: premier orifice
- 44: deuxième orifice
- 46: taraudage
- 48: vis
- 50: évidement
- 51: surface d'appui du cylindre de roue
- 52: face d'épaulement du cylindre de roue
- 54: anneau élastique
- 56: gorge
- 58: bord du perçage

## Revendications

1. Frein (10) à tambour de véhicule automobile qui comporte :
- un plateau (12) fixe ;
- un tambour (14), monté à rotation par rapport au plateau (12), qui est susceptible de porter une roue associée ;
- au moins un segment (18) de freinage, de courbure correspondant à celle d'une jupe (16) interne de friction du tambour (14), qui est monté mobile sur le plateau (12) entre une position inactive dans laquelle il est rappelé élastiquement vers l'axe (A) du tambour (14) avec un jeu déterminé par rapport à la jupe (16) de friction, et une position active dans laquelle il est sollicité radialement contre la jupe (16) de friction ;
- au moins un cylindre (24) de roue hydraulique qui comporte un piston (28) susceptible de solliciter le segment (18) de freinage vers sa position active et qui comporte un corps (30) dont une face (32) de fixation est destinée à être reçue contre une face (34) correspondante du plateau (12), dont une portée (36) cylindrique fait saillie à partie de ladite face (32) de fixation et traverse un perçage (38) axial complémentaire du plateau (12), et dont au moins une vis (48) de fixation, qui traverse le plateau (12), est reçue dans un taraudage (46) de la face (32) de fixation ;
**caractérisé en ce qu'**au moins une partie de la face (32) de fixation excluant le taraudage (46) comporte un évidement (50) destiné limiter la surface (51) de la face (32) de fixation en appui sur le plateau (12), et **en ce qu'**un élément (54) de guidage en translation est interposé entre la portée (36) et le perçage (38) du plateau (12) pour découpler vibratoirement le cylindre (24) de roue du plateau (12) en l'autorisant à vibrer sensiblement axialement au travers du perçage (38) indépendamment du plateau (12).

2. Frein (10) à tambour selon la revendication précédente, **caractérisé en ce que** l'élément (54) de guidage est un élément de guidage réalisé en matériau élastique destiné à rappeler axialement le cylindre (24) vers une position d'équilibre.

3. Frein (10) à tambour selon l'une des revendications 1 ou 2, **caractérisé en ce que** l'élément (54) de guidage élastique est interposé sensiblement radialement entre la portée (36) et le perçage (38) du plateau (12) de manière à amortir les vibrations radiales de la portée (36) du cylindre (24).

4. Frein (10) à tambour selon la revendication précédente, **caractérisé en ce que** l'élément de guidage élastique est un anneau (54) élastique.

5. Frein (10) à tambour selon la revendication précédente, **caractérisé en ce que** l'anneau (54) élastique est reçu dans une gorge (56) annulaire qui est réalisée à la jonction de la portée (36) et de la surface (51) d'appui du corps (30) du cylindre (24).

6. Frein (10) à tambour selon l'une des revendications 4 ou 5 prises en combinaisons avec les revendications 2 et 3, **caractérisé en ce que** l'anneau (54) élastique est reçu radialement contre un bord (58) du perçage (38).

7. Frein (10) à tambour selon l'une des revendications 4 à 6, **caractérisé en ce que** l'anneau (54) élastique est réalisé en un matériau élastomère.

8. Frein (10) à tambour selon l'une des revendications 4 à 7, **caractérisé en ce que** le matériau de l'anneau (54) élastique permet un débattement axial du cylindre (24) compris entre 0.1 et 2mm.

9. Frein (10) à tambour selon l'une des revendications précédente, **caractérisé en ce que** l'évidement (50) est réalisé sensiblement suivant la moitié de la face (32) de fixation du corps (30) du cylindre (24).

## Patentansprüche

1. Trommelbremse (10) für ein Automobil, umfassend:
- eine feste Platte (12);
- eine Trommel (14), welche zur Rotation gegenüber der Platte (12) montiert ist, welche dazu eingerichtet ist, ein zugeordnetes Rad zu tragen;
- wenigstens ein Bremssegment (18) mit einer Krümmung, welche derjenigen einer inneren Reibschürze (16) der Trommel (14) entspricht, welches an der Platte (12) zwischen einer inaktiven Position, in welcher es elastisch zu der Achse (A) der Trommel (14) mit einem vorbestimmten Spiel gegenüber der Reibschürze (16) zurückgezogen ist, und einer aktiven Position, in welcher es radial gegen die Reibschürze (16) drängt, bewegbar montiert ist;
- wenigstens einen hydraulischen Rad-Zylinder (24), welcher einen Kolben (28) umfasst, welcher dazu eingerichtet ist, das Bremssegment (18) in Richtung seiner aktiven Position zu drängen, und welcher einen Körper (30) umfasst, wobei eine Befestigungsfläche (32) dazu vorgesehen ist, gegen eine entsprechende Fläche (34) der Platte (12) aufgenommen zu sein, wobei ein zylindrischer Bereich (36) ausgehend von der Befestigungsfläche (32) und eine komplementäre axiale Bohrung Bohrung (38) der Platte (12) durchquerend vorsteht, und wobei wenigstens eine Befestigungsschraube (48), welche die Platte (12) durchquert, in einem Gewindegang (46) der Befestigungsfläche (32) aufgenommen ist;
**dadurch gekennzeichnet, dass** wenigstens ein Abschnitt der Befestigungsfläche (32), ausgenommen den Gewindegang (46), eine Aussparung (50) umfasst, welche dazu vorgesehen ist, die Oberfläche (51) der Befestigungsfläche (32) in Anlage gegen die Platte (12) zu begrenzen, und dass ein Führungselement (54) in Translation zwischen dem Bereich (36) und der Bohrung (38) der Platte (12) eingefügt ist, um den Rad-Zylinder (24) der Platte (12) vibratorisch zu entkoppeln, indem ihm erlaubt wird, im Wesentlichen axial durch die Bohrung (38) unabhängig von der Platte (12) zu vibrieren.

2. Trommelbremse (10) nach dem vorhergehenden Anspruch, **dadurch gekennzeichnet, dass** das Führungselement (54) ein Führungselement ist, welches aus einem elastischen Material hergestellt ist, welches dazu vorgesehen ist, den Zylinder (24) axial zu einer Gleichgewichtsposition zurückzuziehen.

3. Trommelbremse (10) nach einem der Ansprüche 1 oder 2, **dadurch gekennzeichnet, dass** das elastische Führungselement (54) im Wesentlichen radial zwischen dem Bereich (36) und der Bohrung (38) der Platte (12) derart eingefügt ist, dass radiale Vibrationen des Bereichs (36) des Zylinders (24) abgeschwächt werden.

4. Trommelbremse (10) nach dem vorhergehenden Anspruch, **dadurch gekennzeichnet, dass** das elastische Führungselement ein elastischer Ring (54) ist.

5. Trommelbremse (10) nach dem vorhergehenden Anspruch, **dadurch gekennzeichnet, dass** der elastische Ring (54) in einem ringförmigen Hals (56) aufgenommen ist, welcher an dem Übergang von dem Bereich (36) und der Anlage-Oberfläche (51) des Körpers (30) des Zylinders (24) gebildet ist.

6. Trommelbremse (10) nach einem der Ansprüche 4 oder 5 in Kombination mit den Ansprüchen 2 und 3, **dadurch gekennzeichnet, dass** der elastische Ring (54) radial gegen einen Rand (58) der Bohrung (38) aufgenommen ist.

7. Trommelbremse (10) nach einem der Ansprüche 4 bis 6, **dadurch gekennzeichnet, dass** der elastische Ring (54) aus einem elastomeren Material gebildet ist.

8. Trommelbremse (10) nach einem der Ansprüche 4 bis 7, **dadurch gekennzeichnet, dass** das Material des elastischen Rings (54) einen axialen Federweg des Zylinders (24) erlaubt, welcher zwischen 0,1 und 2 mm beträgt.

9. Trommelbremse (10) nach einem der vorhergehenden Ansprüche, **dadurch gekennzeichnet, dass** die Aussparung (50) im Wesentlichen der Hälfte der Befestigungsfläche (32) des Körpers (30) des Zylinders (24) folgend gebildet ist.

## Claims

1. Motor vehicle drum brake (10) comprising:
- a fixed plate (12);
- a drum (14) mounted rotatably with respect to the plate (12) and suitable for carrying an associated wheel;
- at least one braking segment (18), having a curve corresponding to the curve of an innerfriction skirt (16) of the drum (14), that is mounted movably on the plate (12) between an inactive position wherein it is elastically returned towards the axis (A) of the drum (14) with a predetermined clearance with respect to the friction skirt (16), and an active position wherein it is radially forced against the friction skirt (16);
- at least one hydraulic wheel cylinder (24) that comprises a piston (28) suitable for forcing the braking segment (18) towards the active position thereof and that comprises a body (30), an attachment face (32) of which is intended to be received against a corresponding face (34) of the plate (12), a cylindrical surface (36) of which protrudes from said attachment face (32) and passes through a complementary axial hole (38) of the plate (12), and at least one attachment screw of which (48), which passes through the plate (12), is received in a thread (46) of the attachment face (32);
**characterised in that** at least one portion of the attachment face (32) excluding the thread (46) comprises a recess (50) intended to limit the surface (51) of the attachment face (32) bearing against the plate (12), and **in that** a translation guide element (54) is interposed between the surface (36) and the hole (38) of the plate (12) in order to vibrationally uncouple the wheel cylinder (24) from the plate (12) by allowing it to vibrate substantially axially through the hole (38) independently of the plate (12).

2. Drum brake (10) according to the previous claim, **characterised in that** the guide element (54) is a guide element made from elastic material intended to axially return the cylinder (24) to a position of balance.

3. Drum brake (10) according to one of claims 1 and 2, **characterised in that** the elastic guide element (54) is interposed substantially radially between the surface (36) and the hole (38) of the plate (12) in such a way as to damp the radial vibrations of the surface (36) of the cylinder (24).

4. Drum brake (10) according to the previous claim, **characterised in that** the elastic guide element is an elastic ring (54).

5. Drum brake (10) according to the previous claim, **characterised in that** the elastic ring (54) is received in an annular groove (56) that is made at the junction between the surface (36) and the bearing surface (51) of the body (30) of the cylinder (24).

6. Drum brake (10) according to one of claims 4 or 5 taken in combination with claims 2 and 3, **characterised in that** the elastic ring (54) is received radially against an edge (58) of the hole (38).

7. Drum brake (10) according to one of claims 4 to 6, **characterised in that** the elastic ring (54) is made from an elastomer material.

8. Drum brake (10) according to one of claims 4 to 7, **characterised in that** the material of the elastic ring (54) allows an axial range of movement of the cylinder (24) between .1 and 2mm.

9. Drum brake (10) according to one of the previous claims, **characterised in that** the recess (50) is made substantially along half of the attachment face (32) of the body (30) of the cylinder (24).
